# EUROPÄISCHE PATENTSCHRIFT

(11) **EP 3 854 269 B1**
(45) Veröffentlichungstag und Bekanntmachung des Hinweises auf die Patenterteilung: **19.11.2025**
(21) Anmeldenummer: 21152124.0
(22) Anmeldetag: 18.01.2021
(51) Int. Cl.: A47D 13/02, B62B 7/12, A47C 7/52, B62B 9/12, B62B 9/10, A47D 1/06

(54) **UMWANDELBARE LIEGE- UND SITZANORDNUNG FÜR EINEN SCHIEBEWAGEN**
CONVERTIBLE BED AND SEAT ASSEMBLY FOR A SLIDING CARRIAGE
AGENCEMENT CONVERTIBLE D'ASSISE ET DE COUCHAGE POUR UNE POUSSETTE

(30) Priorität: 21.01.2020 DE 102020101314
(43) Veröffentlichungstag der Anmeldung: 28.07.2021
(73) Patentinhaber: TFK Trends for Kids GmbH, 84030 Ergolding (DE)
(72) Erfinder: BOERBOOM, Stephan, 84172 Buch am Erlbach (DE); BEGER, Oliver, 84187 Weng (DE)
(74) Vertreter: Pröll, Jürgen

(56) Entgegenhaltungen:
- EP-A2- 1 795 424
- DE-A1- 3 901 743
- DE-U1- 202007 011 937
- GB-A- 2 482 611
- JP-B2- 5 019 501
- US-A1- 2008 217 981

## Beschreibung

Diese Beschreibung betrifft eine umwandelbare Liege- und Sitzanordnung für einen zu schiebenden Schiebewagen, wie beispielsweise einen Kinderwagen oder einen Puppenwagen.

Die EP 1 795 424 A2 offenbart eine Liege- und Sitzanordnung für einen Kinder- oder Puppenwagen. Diese Liege- und Sitzanordnung umfasst einen Rahmen und eine Auflage, wobei die Auflage drei Auflageteile aufweist und an dem Rahmen hängend gelagert ist. Die drei Auflageteile sind gelenkig miteinander verbunden und können in eine Liegeposition gebracht werden, in der die drei Auflageteile eine im Wesentlichen ebene Fläche bilden, so dass die Liege- und Sitzanordnung zum Transport eines liegenden Säuglings oder Kleinkinds geeignet ist. Darüber hinaus können die drei Auflageteile in eine Sitzposition gebracht werden, in der ein oberes und ein unteres Auflageteile jeweils gegenüber einem mittleren der Auflageteile abgewinkelt sind, so dass die Liege- und Sitzanordnung zum Transport eines sitzenden Kleinkinds geeignet ist. Hierbei dient das mittlere Auflageteil als Sitz, das obere Auflageteil als Rückenlehne und das untere Auflageteil als Beinauflage.

Die Länge des Rahmens marktüblicher Liege- und Sitzanordnungen dieser Art beträgt ca. 80 Zentimeter. Damit eignet sich eine solche Liege- und Sitzanordnung nur zum Transport von Kindern mit einer Körperlänge von bis zu etwa 80 cm, und damit einem Alter bis maximal etwa 16 Monate. Längere Rahmen sind möglich, unterliegen gemäß der EU-Norm EN 1888 allerdings erheblich höheren Anforderungen an Gurte und Rückhaltesysteme, was mit erheblich höheren Kosten verbunden ist.

US 2008/0217981 A1 beschreibt einen Kinderwagen mit einem rechteckförmigen textilen Gewebe, das an einem Rahmen befestigt ist und das eine Sitzfläche und eine Rückenlehne bildet. Der Kinderwagen umfasst außerdem eine Beinaufnahme, die lösbar an dem Rahmen befestigt ist.

Die DE 20 2007 011 937 U1 beschreibt einen Kinderwagen mit einem Rahmen, einem Sitzeinsatz und einer Beinauflage. Der Sitzeinsatz bildet eine Sitzfläche und eine Rückenlehne und ist an dem Rahmen befestigt. Die Beinauflage grenzt an die Sitzeinheit an und ist ebenfalls an dem Rahmen befestigt.

Die JP 5019501 B2 beschreibt einen Kinderwagen mit einer Sitzanordnung, die eine Rückenlehne, einen Sitz und eine Sitzverlängerung aufweist, wobei die Rückenlehne geneigt werden kann.

Die DE 39 01 743 A1 beschreibt einen Kinderwagen mit einer Liege- und Sitzanordnung, die in eine Liegeposition und eine Sitzposition gebracht werden kann und die drei Auflageteile aufweist, die relativ zueinander abgewinkelt werden können.

Die GB 2 482 611 A beschreibt einen Kinderwagen mit einer Sitzanordnung, die eine Rückenlehne, einen Sitz und eine an dem Sitz befestigte Beinauflage aufweist.

Es besteht ein Bedarf nach einer Liege- und Sitzanordnung, die einen sicheren Transport von Säuglingen im Liegen, aber auch einen sicheren und bequemen Transport von größeren Kleinkindern im Sitzen, wie beispielsweise Kindern bis zu etwa 3 Jahren ermöglicht.

Die Erfindung betrifft eine Liege- und Sitzanordnung mit einem Rahmen und einer Auflage. Die Auflage umfasst ein erstes Auflageteil und ein zweites Auflageteil, die relativ zueinander abgewinkelt werden können und die hängend an dem Rahmen gelagert sind. Die Liege- und Sitzanordnung umfasst außerdem ein drittes Auflageteil. Das dritte Auflageteil ist benachbart zu dem zweiten Auflageteil angeordnet, lösbar an dem Rahmen befestigt und ragt an unteren Ende des Rahmens über den Rahmen hinaus. Die Liege-und Sitzanordnung umfasst außerdem ein textiles Gewebe, das an dem Rahmen befestigt ist und eine Tasche bildet, wobei das erste und das zweite Auflageteil in der Tasche angeordnet sind.

Diese Liege- und Sitzanordnung eignet sich, insbesondere bei demontiertem dritten Auflageteil, zum Transport eines Säuglings, wobei das erste und zweite Auflageteil eine Liegefläche bilden. Gemäß der Erfindung weist die Liege- und Sitzanordnung das dritte Auflageteil auf, durch welches die Auflage über den Rahmen hinaus verlängert ist, so dass die Anordnung zum Transport eines sitzenden Kleinkinds geeignet ist.

Dadurch, dass das dritte Auflageteil über den Rahmen hinausragt, und damit die Auflage über den Rahmen hinaus verlängert, stellt eine Länge des Rahmens keine Beschränkung bezüglich der Körpergröße des zu transportierenden Kindes dar.

Beispiele sind nachfolgend anhand von Zeichnungen erläutert. Die Zeichnungen dienen dazu, bestimmte Prinzipien zu veranschaulichen, sodass nur Aspekte, die zum Verständnis dieser Prinzipien notwendig sind, dargestellt sind. Die Zeichnungen sind nicht maßstabsgerecht. In den Zeichnungen bezeichnen dieselben Bezugszeichen gleiche Merkmale.
Figuren 1A und 1B zeigen eine Draufsicht und eine Seitenansicht einer Liege- und Sitzanordnung, die einen Rahmen und eine Auflage aufweist, wobei die Auflage ein erstes und ein zweites Auflageteil, die innerhalb des Rahmens angeordnet sind, und ein abnehmbares drittes Auflageteil aufweist;
Figur 2A zeigt ein Beispiel des dritten Auflageteils in einer Ansicht von unten.
Figur 2B zeigt ein Detail des dritten Auflageteils und veranschaulicht eine Möglichkeit zur Befestigung des dritten Aufnahmeteils am Rahmen;
Figur 2C zeigt eine Seitenansicht des Rahmens mit daran montiertem dritten Auflageteil;
Figuren 3A und 3B zeigen eine Draufsicht und eine Seitenansicht der Liege- und Sitzanordnung bei abgenommenem dritten Auflageteil und wenn sich die Liege- und Sitzanordnung in einer Liegeposition befindet;
Figur 4 zeigt eine Seitenansicht der Liege- und Sitzanordnung bei abgenommenem dritten Auflageteil und wenn sich die Liege- und Sitzanordnung in einer Sitzposition befindet;
Figur 5 zeigt eine Seitenansicht einer Liege- und Sitzanordnung, die zusätzlich eine Haltevorrichtung für den Rahmen und ein Verdeck aufweist, in einer Liegeposition;
Figur 6 zeigt eine perspektivische Ansicht des Rahmen, der Haltevorrichtung und einer Tragvorrichtung des Verdecks der Liege- und Sitzanordnung gemäß Figur 5;
Figur 7 zeigt eine Seitenansicht einer Liege- und Sitzanordnung des in Figur 5 gezeigten Typs mit daran befestigtem dritten Auflageteil in einer Sitzposition;
Figur 8 zeigt eine perspektivische Ansicht des Rahmen, der Haltevorrichtung und der Tragvorrichtung des Verdecks der Liege- und Sitzanordnung gemäß Figur 7 in einer Sitzposition;
Figuren 9A und 9B zeigen einen Wagen mit einem fahrbaren Untergestell und einer Liege- und Sitzanordnung in einer ersten Konfiguration und mit verschiedenen Positionierungen der Liege- und Sitzanordnung; und
Figur 10 zeigt den Wagen gemäß der Figuren 9A und 9B in einer zweiten Konfiguration.

In der nachfolgenden detaillierten Beschreibung wird auf die beigefügten Zeichnungen Bezug genommen. Die Zeichnungen bilden einen Teil der Beschreibung und zeigen zur Veranschaulichung Beispiele, wie die Erfindung realisiert werden kann. Selbstverständlich können die Merkmale der verschiedenen hierin beschriebenen Ausführungsbeispiele miteinander kombiniert werden, sofern nicht explizit etwas anderes angegeben ist.

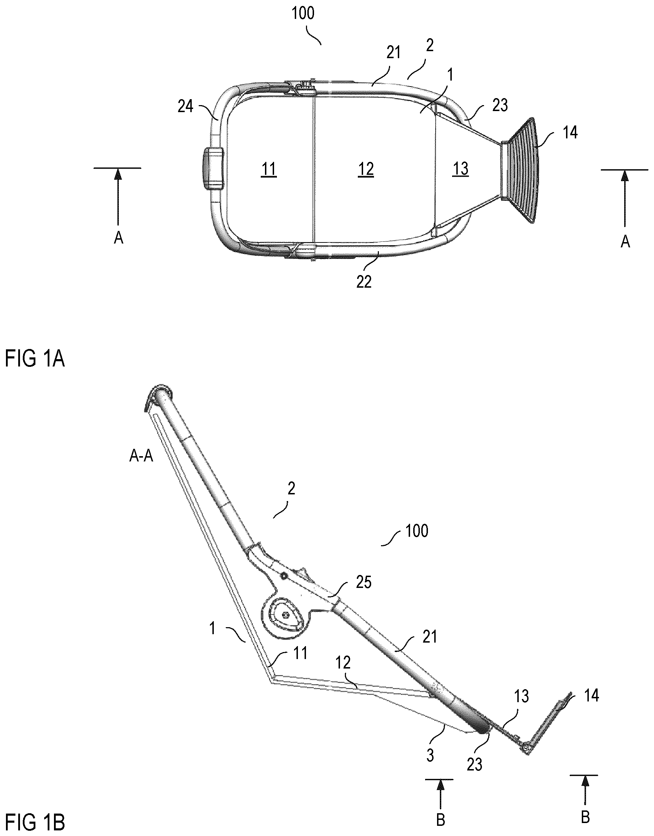

Die Figuren 1A und 1B zeigen eine Draufsicht (Figur 1A) und eine seitliche Schnittdarstellung (Figur 1B) einer umwandelbaren Liege- und Sitzanordnung eines Wagens, wie beispielsweise eines Kinderwagens oder eines Puppenwagens, wobei in den Figuren 1A und 1B lediglich die Liege- und Sitzanordnung, nicht jedoch weitere Teile des Wagens dargestellt sind. Die Liege- und Sitzanordnung umfasst einen Rahmen 2 und eine Auflage mit einem ersten Auflageteil 11 und einem zweiten Auflageteil 12, die relativ zueinander abgewinkelt werden können und die hängend an dem Rahmen 2 gelagert sind. Die Liege- und Sitzanordnung, insbesondere die Auflage 1 der Liege- und Sitzanordnung, umfasst weiterhin eine drittes Auflageteil 13, das benachbart zu dem zweiten Auflageteil 12 angeordnet ist, das lösbar an dem Rahmen 2 befestigt ist und das an einem unteren Ende des Rahmens über den Rahmen 2 hinausragt.

Der Rahmen 2 kann, wie in Figur 1A dargestellt ist, in Draufsicht im Wesentlichen rechteckförmig sein und eine erste und eine zweite Seitenstrebe 21, 22 umfassen, die durch eine untere Querstrebe 23 und eine obere Querstrebe 24 miteinander verbunden sind. Im Bereich der Ecken, also dort, wo die einzelnen Streben miteinander verbunden sind, kann der Rahmen abgerundet sein. Die Seitenstreben 21, 22 und die Querstreben 23, 24 können auf beliebige Weise miteinander verbunden sein. Gemäß einem Beispiel ist der Rahmen einstückig ausgebildet, so dass die Seitenstreben 21, 22 und die Querstreben 23, 24 stoffschlüssig miteinander verbunden sein. Gemäß einem weiteren Beispiel sind die Seitenstreben 21, 22 durch beliebige Verbindungselemente (Schrauben, Nieten, ...) miteinander verbunden. Gemäß noch einem weiteren Beispiel umfasst der Rahmen zwei U-förmige Elemente, von denen das eine die untere Querstrebe 23 und erste Teile der beiden Seitenstreben 21, 22 bildet und von denen das andere die obere Querstrebe 24 und zweite Teile der beiden Seitenstreben 21, 22 bildet. Die beiden U-förmigen Elemente sind im Bereich der Seitenstreben miteinander verbunden, beispielsweise indem die ersten und zweiten Teile der Seitenstreben in Muffen eingesteckt sind, die beispielsweise aus Kunststoff bestehen und die als Teil des Rahmens angesehen werden können. Ein Beispiel einer solchen Muffe ist in Figur 1B dargestellt und mit dem Bezugszeichen 25 bezeichnet.

Mit "Längsrichtung" des Rahmens 2 wird nachfolgend eine Richtung bezeichnet, in der die untere und obere Querstrebe 23, 24 beabstandet zueinander angeordnet sind. Die "Querrichtung" bezeichnet eine Richtung, in der die erste und zweite Seitenstrebe 21, 22 beabstandet zueinander angeordnet sind. Die "Länge" des Rahmens bezeichnet den maximalen Abstand zwischen der oberen und der unteren Querstrebe. Das erste und das zweite Auflageteil 11, 12 sind gemäß einem Beispiel innerhalb des Rahmens 2 angeordnet. Das heißt, das erste und das zweite Auflageteil 11, 12 können zwar in einer Richtung, die senkrecht zu der Längsrichtung und senkrecht zu der Querrichtung verläuft, beabstandet zu dem Rahmen 2 angeordnet sein, ragen allerdings weder in der Längsrichtung noch in der Querrichtung über den Rahmen 2 hinaus.

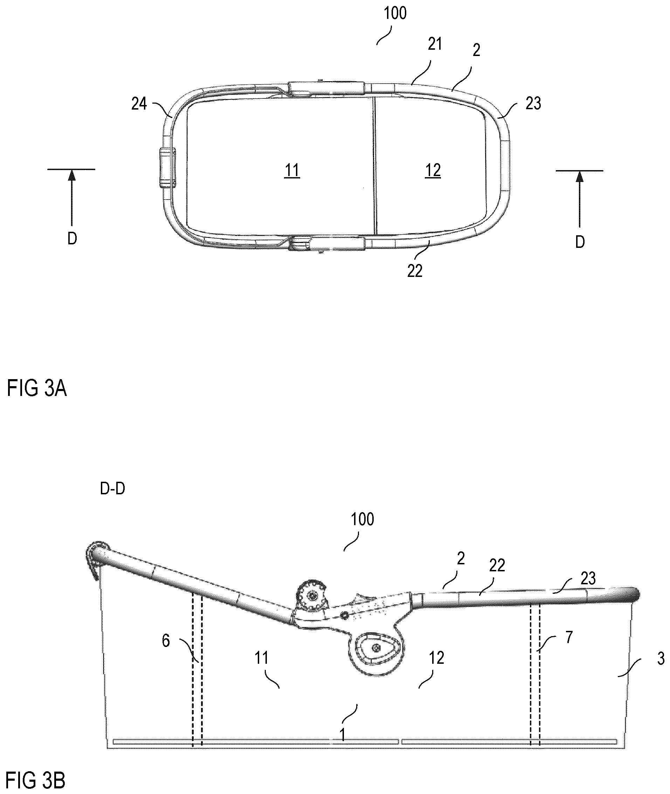

Die hängende Lagerung des ersten und zweiten Auflageteils 11, 12 an dem Rahmen 2 erfolgt beispielsweise mittels eines textilen Gewebes 3, das an dem Rahmen 2 befestigt ist und eine Tasche bildet, wobei das erste und das zweite Auflageteil 11, 12 wie ein Boden in dieser Tasche angeordnet sind. Diese ist weiter unten anhand der Figuren 3A und 3B noch näher erläutert. Das textile Gewebe 3 ermöglicht es aufgrund seiner Flexibilität, das erste und das zweite Auflageteil 11, 12 unterschiedlich zu positionieren. Insbesondere ist es dadurch möglich, ein oberes Ende des ersten Auflageteils 11 und ein unteres Ende des zweiten Auflageteils in Richtung des Rahmens 2 zu bewegen, was nachfolgend noch erläutert ist. Das "obere Ende" des ersten Auflageteils 11 ist das Ende, das der oberen Querstrebe 24 zugewandt ist, und das "untere Ende" (oder auch vorderes Ende) des zweiten Auflageteils 11 ist das Ende, das der unteren Querstrebe 23 zugewandt ist

Gemäß einem Beispiel sind das dem oberen Ende abgewandte untere Ende des ersten Auflageteils 11 und das dem unteren Ende abgewandte obere Ende des zweiten Auflageteils 12 gelenkig miteinander verbunden, um das obere und untere Auflageteil relativ zueinander abwinkeln zu können. Die gelenkige Verbindung der beiden Auflagenteile 11, 12 kann auf beliebige geeignete und grundsätzlich bekannte Weise erfolgen. Ein Beispiel umfasst das Vorsehen eines Scharniers zwischen den beiden Auflageteilen. Gemäß einem weiteren Beispiel sind die beiden Auflageteile durch eines oder mehrere flexible Bänder miteinander verbunden. Gemäß einem weiteren Beispiel ist vorgesehen, die beiden Auflageteile beabstandet zueinander in ein doppellagiges textiles Gewebe einzunähen oder in durch das Gewebe gebildete Taschen einzuschieben, wobei das Gewebe zwischen den eingenähten oder eingeschobenen Auflageteilen die gelenkige Verbindung bildet. Die ersten und zweiten Auflageteile bestehen beispielsweise aus Kunststoff, Holz oder einer Kombination von Kunststoff und Holz und sind so dimensioniert, dass sie eine zum Transport eines Kindes geeignete Biege- und Verwindungssteifigkeit besitzen.

Die Figuren 1A und 1B zeigen die Liege- und Sitzanordnung in einer Sitzposition. In dieser Sitzposition sind das erste Auflageteil 11 und das zweite Auflageteil 12 relativ zueinander abgewinkelt, wobei das erste Auflageteil 11 eine Rückenlehne bildet und das zweite Auflageteil 12 einen Sitz bildet. Das dritte Auflageteil 13 ist in dem dargestellten Beispiel relativ zu dem zweiten Auflageteil 12 abgewinkelt und bildet eine Beinauflage. Die Beinauflage 13 ist lösbar an dem Rahmen 2 befestigt und ragt in Längsrichtung des Rahmens über den Rahmen 2 hinaus, wodurch sich die Sitzanordnung insbesondere für Kleinkinder eignet, deren Körpergröße die Abmessungen des Rahmens 2 in Längsrichtung übersteigt. Die "Längsrichtung" des Rahmens 2 ist die Richtung, in der die obere Querstrebe 24 und die untere Querstrebe 23 im Wesentlichen zueinander beabstandet sind, bzw. die Richtung, in der Längsrichtungen der Seitenstreben 21, 22 im Wesentlichen verlaufen. Die Abmessung des Rahmens in Längsrichtung beträgt beispielsweise maximal 80 cm. Die Abmessungen der Beinauflage 13 in der Längsrichtung des Rahmens betragen beispielsweise zwischen 20 cm und 30 cm, so dass das dritte Auflageteil 13 die Auflage 1 um 20 bis 30 cm gegenüber dem durch das erste und zweite Auflageteil 11, 12 gebildeten Abschnitt verlängert.

Optional umfasst die Auflage 1 ein viertes Auflageteil 14, das als Fußauflage dient und das an einem dem Sitz 12 abgewandten Ende der Beinauflage 13 befestigt ist. Die Fußauflage 14 ist gegenüber der Beinauflage 13 abgewinkelt, wobei ein Winkel zwischen der Fußauflage 14 und der Beinauflage 13 mehr als 80°, beispielsweise zwischen 80° und 120° beträgt. Dieser Winkel kann fest vorgegeben sein oder kann variabel sein, wobei im zuletzt genannten Fall eine gelenkige Verbindung zwischen dem vierten Auflageteil 14 und dem dritten Auflageteil 13 vorhanden ist. Gemäß einem Beispiel kann das vierte Auflageteil 14, beispielsweise zur Aufbewahrung, so eingeklappt werden, dass ein Winkel zwischen dem dritten und dem vierten Auflageteil 13, 14 etwa 0° beträgt.

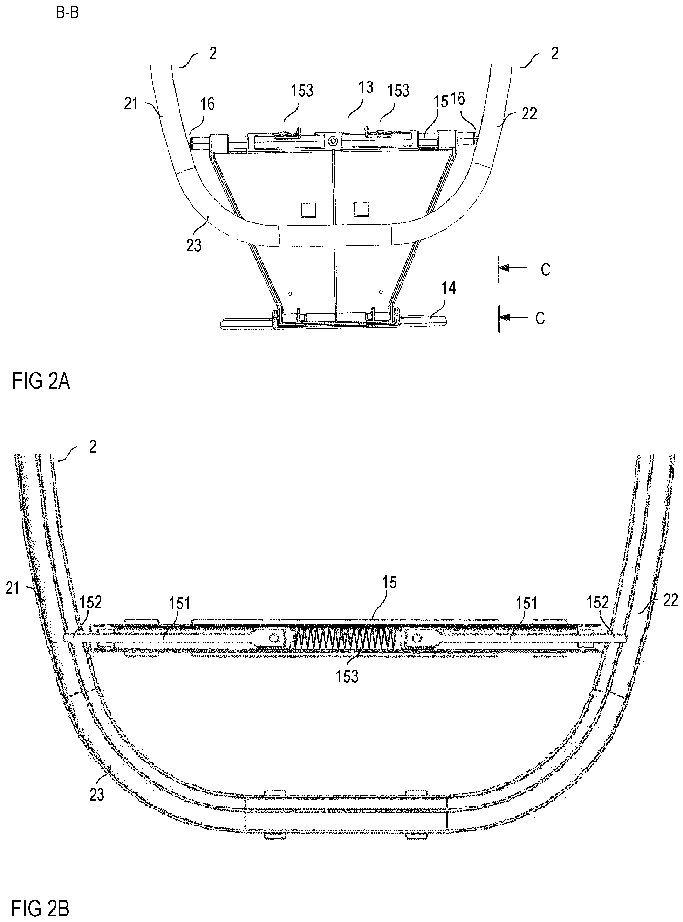

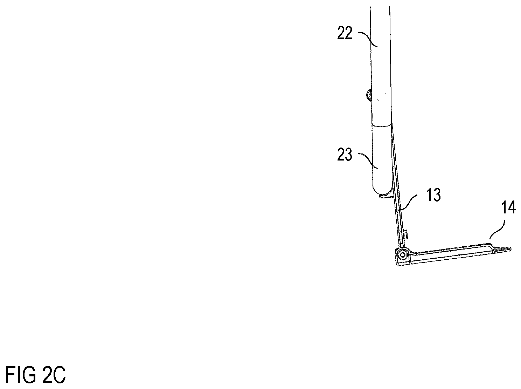

Figur 2A zeigt in Ansicht von unten einen Ausschnitt des Rahmens 2 und der abnehmbaren Verlängerung mit der Beinauflage 13 und der Fußauflage 14, weiter im Detail, wobei in Figur 2A lediglich der Rahmen 2, die Beinauflage 13 und die optionale Fußauflage 14 dargestellt sind Nicht dargestellt sind jedoch das textile Gewebe 3, der Sitz 12 und die Rückenlehne 13. Figur 2B zeigt einen Querschnitt des in Figur dargestellten Abschnitts des Rahmens 2 und einer Querstrebe 15 der Beinauflage 13. Übrige Teile der Beinauflage 13 sind in Figur 2B nicht dargestellt.

Bezugnehmend auf die Figuren 2A und 2B kann die Beinauflage 13 durch die Querstrebe 15 lösbar an den beiden Seitenstreben 21, 22 des Rahmens befestigt werden. In der Querstrebe 15 sind hierzu beispielsweise verschiebbare Fixierstifte 151 angeordnet, die in einer Endposition über ein jeweiliges Ende der Querstrebe 15 hinausragen und so in Aussparungen der Seitenteile 21, 22 eingreifen können, um die Querstrebe 15, und damit die Beinauflage 13 an dem Rahmen 2 zu sichern. Bei dem in Figur 2B gezeigten Beispiel werden die beiden Fixierstifte 151 durch eine Feder 153 in der Endposition gehalten, die ein Verschieben der Fixierstifte 151 in die Querstrebe 15, und damit ein unbeabsichtigtes Lösen der Verbindung zwischen der Querstrebe 15 und dem Rahmen 2 verhindert. Die Feder 153 ist in der Querstrebe 15 angeordnet und greift an Enden der Fixierstifte 151 an, die den aus der Querstrebe 15 heraus ragenden Enden 152 gegenüberliegen.

Die Feder 153 ist nur ein Beispiel, um die Fixierstifte 151 in der Endposition zu halten. Beliebige andere Sicherungs- und/oder Einrastmechanismen können ebenso verwendet werden.

Zum Befestigen der Beinauflage 13 an dem Rahmen werden die Fixierstifte 151 zunächst aus der Endposition gegen die Federkraft so weit in die Querstrebe 15 geschoben, dass die Querstrebe 15 zwischen den Aussparungen im Rahmen 2 positioniert werden kann. Zum Verschieben der Fixierstifte 151 sind an den Fixierstiften 151 Griffelemente 153 angebracht, die über Aussparungen in der Querstrebe 15 zugänglich sind. Wenn die Querstrebe 15 in der gewünschten Position ist, können die Griffelemente einfach losgelassen werden, so dass die Enden 152 der Fixierstifte 151 durch die Federkraft in die Aussparungen am Rahmen 2 eingreifen und die Beinauflage 13 auf diese Weise sichern. Um die Beinauflage 13 abzunehmen, werden die Fixierstifte 151 soweit in die Querstrebe 15 zurückgeschoben bis die Enden 152 der Fixierstifte 151 außerhalb der Aussparungen sind, so dass die Beinauflage 13 abgenommen werden kann.

Die Befestigung der Beinauflage 13 an dem Rahmen 2 erfolgt beispielsweise an einer Position, die in Längsrichtung des Rahmens 2 gegenüber der unteren Querstrebe 23 versetzt ist. Die Position der Befestigung der Beinauflage 13 an dem Rahmen ist beispielsweise so gewählt, dass das untere Ende des Sitzes 12 (des zweiten Auflageteils) an die Beinauflage 13 angrenzt oder sich nahe (im Bereich von einigen Zentimetern) an der Beinauflage 13 befindet, wenn sich die Liege- und Sitzanordnung in der Sitzposition ist und die Beinauflage 13 montiert ist. Die Querstrebe 15 der Beinauflage 13 ist im montierten Zustand der Beinauflage beispielsweise im Wesentlichen parallel zu der unteren Querstrebe des Rahmens 2.Wie erläutert eignet sich die Liege- und Sitzanordnung aufgrund der über den Rahmen 2 hinausragenden Beinauflage 13 als Sitz für Kinder, deren Körpergröße die Länge des Rahmens 2 überragt. Darüber hinaus eignet sich die Liege-und Sitzanordnung auch als Liege, beispielsweise für Säuglinge, was in den Figuren 3A und 3B dargestellt ist. Die Figuren 3A und 3B zeigen eine Draufsicht und eine Seitenansicht im Querschnitt der in den Figuren 1A und 1B gezeigten Liege- und Sitzanordnung, wenn sich die Liege- und Sitzanordnung in einer Liegeposition befindet. Die Beinauflage 13 ist in diesem Fall demontiert und die Rückenlehne 11 und der Sitz 12 sind so angeordnet, dass sie innerhalb der Tasche, die durch das textile Gewebe 3 gebildet ist, eine ebene Auflagefläche bilden.

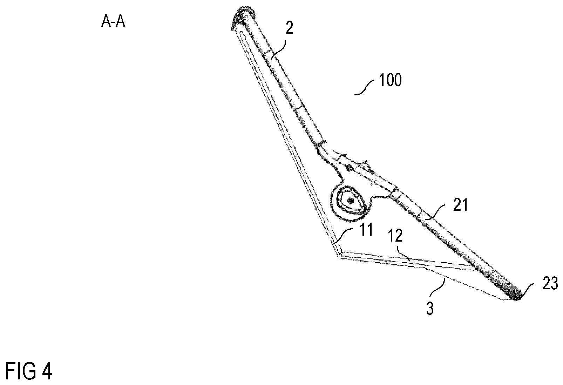

Die Liege- und Sitzanordnung kann auch in der in den Figuren 3A und 3B gezeigten Konfiguration, also ohne Beinauflage 13, in eine Sitzposition gebracht werden, wie in Figur 4 dargestellt ist. Figur 4 zeigt die Liege- und Sitzanordnung ohne Beinauflage 13 in einer Sitzposition, in der die Rückenlehne 11 und der Sitz 12 relativ zueinander abgewinkelt sind.

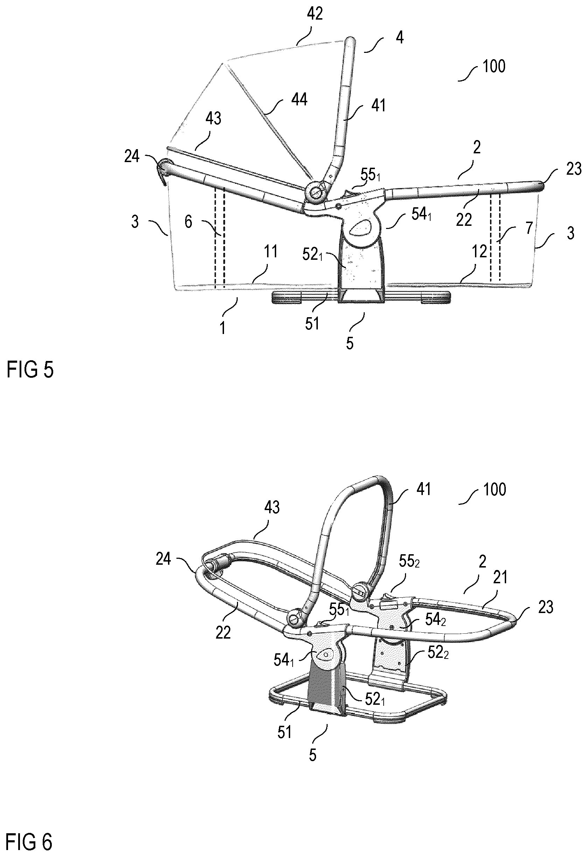

Das Abwinkeln der Rückenlehne 11 und des Sitzes 12 relativ zueinander kann beispielsweise durch einen oder mehrere Gurte (in den Figuren 1A und 1B nicht dargestellt; vgl. 6 in den weiter unten erläuterten Figuren 3B und 5) erfolgen, wobei jeder Gurt mit einem Ende an einer der Seitenstreben 21, 22 und einem anderen Ende an der anderen der beiden Seitenstreben 21, 22 befestigt ist und ausgehend von den Seitenstreben 21, 22 um jeweils eine der ersten und zweiten Auflageteile 11, 12 herumgeführt ist. Der Gurt kann hierbei innerhalb der Tasche 3 oder außerhalb der Tasche 3 um die jeweilige Auflage 11, 12 herumgeführt werden. Durch Verspannen des Gurtes oder der Gurte können die Auflagenteile 11, 12 relativ zu dem Rahmen 2 verstellt werden, um so die in den Figuren 1A und 1B und 4 dargestellten Sitzpositionen zu ermöglichen. In der in Figur 3B dargestellten Liegeposition sind die Gurte beispielsweise vollständig entspannt, wodurch die Auflagenteile 11, 12 am Boden der durch das textile Gewebe 3 gebildeten Tasche eine wenigstens annähernd ebene Auflagefläche bilden. Derartige Verstellmechanismen sind grundsätzlich bekannt, so dass auf weitere Ausführungen hierzu verzichtet werden kann.

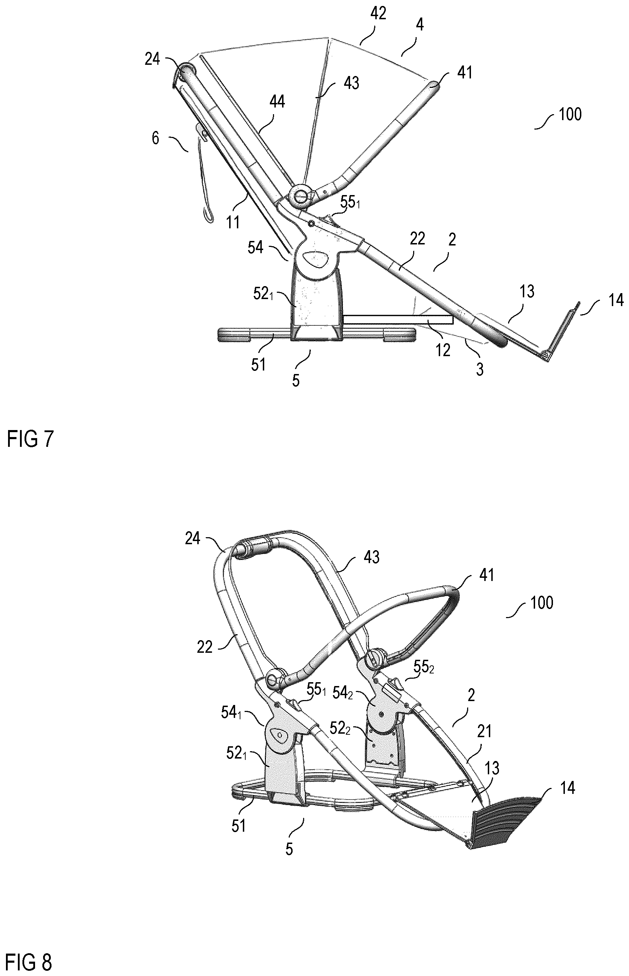

In den bislang erläuterten Figuren ist von der Liege- und Sitzanordnung lediglich der Rahmen 2, die durch das textile Gewebe 3 gebildete Tasche und die Auflage 1 dargestellt. Der Rahmen kann beispielsweise an einem fahrbaren Untergestell derart befestigt werden, dass der Rahmen 2 gegenüber dem Untergestell schwenkbar gelagert ist, um den Rahmen 2 wenigstens in eine Liegeposition gemäß der Figuren 3A und 3B (und der noch zu erläuternden Figuren 5 und 6) und eine Sitzposition gemäß der Figuren 1A und 1B und 4 (und der Noch zu erläuternden Figuren 7 und 8) bringen zu können.

Gemäß einem weiteren Beispiel, das in Figur 5 gezeigt ist, umfasst die Liege- und Sitzanordnung außer den Rahmen 2, dem textilen Gewebe 3 und der Auflage 1 (die in Figur 5 nicht zu sehen ist) eine Halte- und Standvorrichtung 5, an der der Rahmen 2 befestigt ist. Figur 6 zeigt das Gestell der in Figur 5 dargestellten Anordnung, also die Anordnung ohne die Tasche aus dem textilen Gewebe 3 und ohne die Auflage 1, in einer perspektivischen Ansicht.

Bezugnehmend auf die Figuren 5 und 6 umfasst die Halte- und Standvorrichtung 5 einen Fuß 51, der in dem dargestellten Beispiel einen im Wesentlichen rechteckförmigen Rahmen aufweist, und zwei an dem Fuß 51 befestigte Stützen bzw. Adapter 52₁, 52₂, an denen der Rahmen 2 befestigt ist. Der Rahmen des Fußes 51 kann durch zwei U-förmige Rahmenabschnitte gebildet sein, die jeweils in Muffen an unteren Enden der Adapter 52₁, 52₂ eingesteckt sind. "Untere Enden der Adapter 52₁, 52₂" sind solche Enden der Adapter 52₁, 52₂, die den Enden abgewandt sind, an denen der Rahmen 2 mit den Adaptern 52₁, 52₂ befestigt ist. Der Rahmen 2 ist an jedem der Adapter 52₁, 52₂ gelenkig befestigt. Ein Gelenk 54₁, 54₂ ist hierbei jeweils zwischen einem Unterteil und einem Oberteil jedes der Adapter 52₁, 52₂ gebildet. Das Unterteil ist der Teil des jeweiligen Adapters 52₁, 52₂, der das untere Ende umfasst, an dem der Fuß 51 befestigt ist, und das Oberteil ist der Teil des jeweiligen Adapters 52₁, 52₂, an dem der Rahmen 2 befestigt ist. Bei dem in den Figuren 5 und 6 dargestellten Beispiel umfasst der Rahmen 2 zwei U-förmige Rahmenabschnitte, die in Muffen an den Oberteilen der Adapter 52₁, 52₂ eingesteckt sind, um so den Rahmen zu bilden.

Die Gelenkteile 54₁, 54₂ ermöglichen ein Schwenken des Rahmens 2 gegenüber den Adaptern 52₁, 52₂, um den Rahmen 2 auf diese Weise in eine Liegeposition und wenigstens eine Sitzposition bringen zu können. Die Gelenke 54₁, 54₂ weisen also jeweils wenigstens zwei Einraststellungen auf, eine erste Einraststellung für die Liegeposition und eine zweite Einraststellung für die wenigstens eine Sitzposition. Betätigungselemente 55₁, 55₂ an den Gelenken ermöglichen ein Arretieren des Rahmens 2 in einer der wenigstens zwei Positionen bzw. ein Lösen der Arretierung, um den Rahmen schwenken zu können.

In der Liegeposition ist der Rahmen 2 beispielsweise im Wesentlichen parallel zu einer durch den Fuß 51 gebildeten Auflagefläche. In der wenigstens einen Sitzposition ist der Rahmen in seiner Längsrichtung gegenüber der durch den Fuß 51 gebildeten Auflagefläche geschwenkt, beispielsweise um einen Winkel, der zwischen 30° und 50° beträgt.

Bei dem in den Figuren 5 und 6 gezeigten Beispiel umfasst die Liege- und Sitzanordnung außerdem ein Verdeck 4 in einem oberen Bereich des Rahmens 2, also in einem Bereich, der an die obere Querstrebe 24 angrenzt. Dieses Verdeck 4 umfasst einen U-förmigen Bügel 41. Dieser Bügel ist beispielsweise schwenkbar an dem Rahmen 2 befestigt, um ein Öffnen und Schließen des Verdecks 4 zu ermöglichen. Darüber hinaus umfasst das Verdeck 4 eine an dem Bügel 41 befestigte Verspannung 42 und eine oder mehrere U-förmige Verstrebungen 43, 44 die zusammen mit dem Bügel 41 die Bespannung 42 des Verdecks 4 aufspannen und die beispielsweise dieselben Drehpunkte wie der Bügel 41 haben. Eine erste Verstrebung 43 der Verstrebungen 43, 44 besteht, wie der Bügel 41, beispielsweise aus Metall und ist an dem Rahmen 2 befestigt. Eine zweite 44 der Verstrebungen besteht beispielsweise aus Kunststoff und ist in das Verdeck 42 eingenäht oder in einen entsprechenden Tunnel am Verdeck 42 eingeschoben.

Figur 7 zeigt die Liege- und Sitzanordnung gemäß der Figuren 5 und 6 in einer Sitzposition und Figur 8 zeigt eine perspektivische Ansicht des Gestells der in Figur 7 dargestellten Liege- und Sitzanordnung, also der Liege- und Sitzanordnung ohne Tasche 3 und Bespannung 42 des Verdecks 4. Die in den Figuren 7 und 8 dargestellte Sitzposition wird dadurch erreicht, dass der Rahmen 2 mittels der Gelenke 54₁, 54₂ gegenüber den Adaptern 52₁, 52₂ aus der in den Figuren 5 und 6 dargestellte Liegeposition geschwenkt wird. Durch das Schwenken des Rahmens 2 kommt das zweite Auflageteil 12 (der Sitz) zur Auflage auf dem Fuß 51 der Standvorrichtung 5, so dass das untere Ende des zweiten Auflageteil 12 "automatisch" in Richtung des Rahmens 2 und insbesondere in Richtung des Befestigungspunktes der Beinauflage 13 an dem Rahmen 2 bewegt wird. Eine zusätzliche Verstellvorrichtung ist bei dieser Liege-und Sitzanordnung lediglich für die Rückenlehne 11 (das erste Auflageteil) erforderlich. Diese Verstellvorrichtung umfasst beispielsweise um die Rückenlehne 11 herum geführten Gurt 6 (vgl. die Figuren 3B und 5), der gespannt werden kann, um das obere Ende der Rückenlehne 11 ausgehend von der in Figur 5 gezeigten Liegeposition in Richtung des Rahmens 2 anzuheben, wie im Ergebnis in Figur 7 dargestellt ist. Dieser Gurt 6 kann in einem Tunnel des textilen Gewebes 3 angeordnet und so innerhalb des Tunnels verschiebbar sein, dass das textile Gewebe im Bereich der Rückenlehne 11 gerafft werden kann, so dass sich die Rückenlehne 11 in Richtung des Rahmens 2 bewegt. Der Gurt 6 kann an dem Rahmen 2 und/oder dem textilen Gewebe 3 befestigt sein, und zwar jeweils so, dass sich ein oberer Teil der Rückenlehne bei Spannen des Gurts in Richtung des Rahmens bewegt, um damit eine Neigung der Rückenlehne gegenüber dem Rahmen 2 zu verstellen.

Optional kann eine separate Verstellvorrichtung 7 auch für das zweite Auflageteil (den Sitz) 12 vorgesehen werden, wodurch sich eine stufenlose Verstellmöglichkeit wie bei der Rückenlehne 11 auch für den Sitz 12 ergibt. Diese Verstellvorrichtung für den Sitz 12 kann entsprechend der Verstellvorrichtung für die Rückenlehne 11 einen Gurt umfassen, der am Rahmen 2 oder am textilen Gewebe 3 befestigt ist. Er kann längenverstellbar sein oder aus zwei Einzelgurten bestehen, deren Länge zusammen die Breite des Rahmens 2 ergeben, die mit einem Gurtschloss versehen sind, um diese unter dem Sitz 12 zusammen zu verbinden.

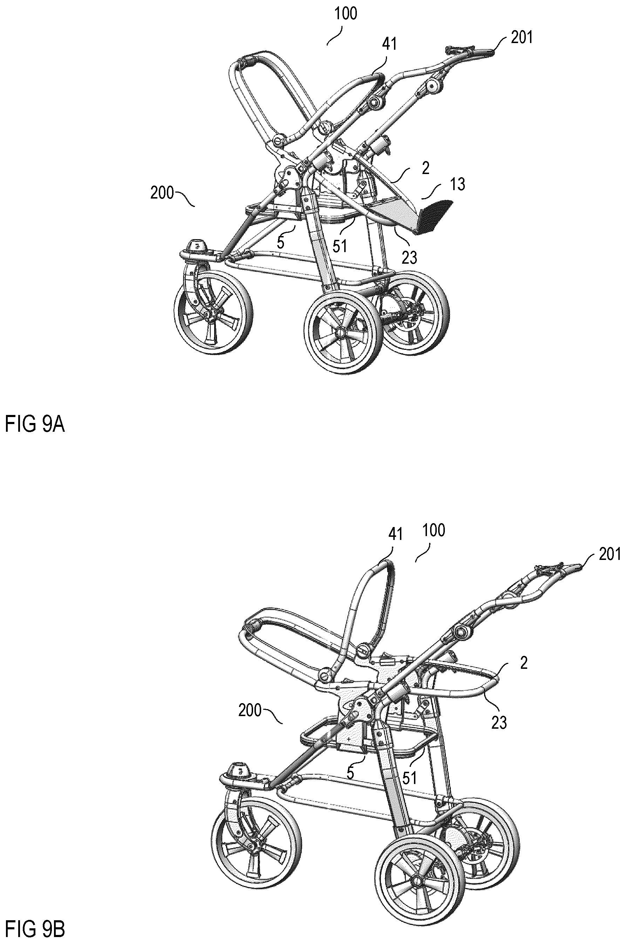

Die Figuren 9A und 9B zeigen einen Wagen mit einem fahrbaren Untergestell 200 und einer an dem Untergestell befestigten Liege- und Sitzanordnung 100 des anhand der Figuren 5-8 erläuterten Typs. Zum besseren Verständnis ist die Liege- und Sitzanordnung 100 in den Figuren 9A und 9B ohne Tasche 3, erstes und zweites Auflageteil 11, 12 und ohne Bespannung 41 des Verdecks 4 dargestellt.

Das Untergestell 200 weist drei Räder (wie dargestellt) oder vier Räder (nicht dargestellt) und einen Schiebegriff 201 auf. Das Untergestell kann ein für Kinder- oder Puppenwagen hinlänglich bekanntes Untergestell sein, so dass sich weitere Ausführungen hierzu erübrigen.

Die Halte- und Standvorrichtung 5 ist bei diesem Beispiel lösbar, jedoch starr an dem Untergestell 200 befestigt, wobei der Rahmen 2 der Liege- und Sitzanordnung 100 anhand der oben erläuterten Gelenke 54₁, 54₂ gegenüber der Halte- und Standvorrichtung 5, und damit gegenüber dem Untergestell 200 geschwenkt werden kann. Figur 9A zeigt die Liege- und Sitzanordnung 100 in Sitzposition mit montierter Beinauflage und Figur 9B zeigt die Liege- und Sitzanordnung in Liegeposition mit demontierter Beinauflage.

Gemäß einem Beispiel ist vorgesehen, dass die Liege- und Sitzanordnung 100 in einer von zwei unterschiedlichen Ausrichtungen an dem Untergestell 200 befestigt werden kann, wobei die Liege- und Sitzanordnung in einer ersten der zwei Ausrichtungen um 180° gegenüber einer zweiten der zwei Ausrichtungen gedreht ist. Die Figuren 9A und 9B die Liege-und Sitzanordnung 100 in einer ersten Ausrichtung in der die Liege- und Sitzanordnung so orientiert ist, dass die untere Querstrebe 23 der Liege- und Sitzanordnung in Richtung des Schiebegriffs 201 des Wagens zeigt. Ein in der Liege- und Sitzanordnung 100 liegendes oder sitzendes Kind kann auf diese Weise in Richtung einer den Wagen schiebenden Person, und damit entgegen der Fahrtrichtung blicken.

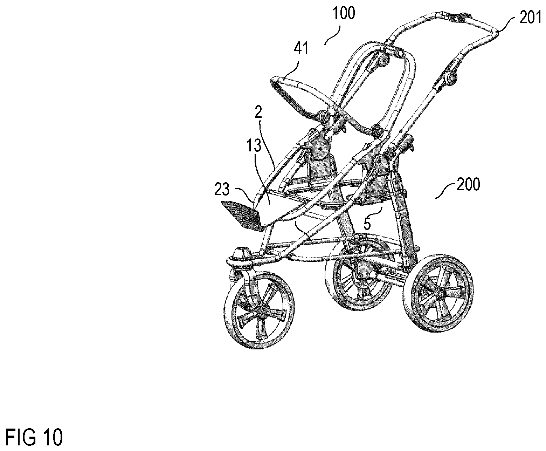

Figur 10 zeigt die Liege- und Sitzanordnung in einer zweiten Ausrichtung, in der die Liege- und Sitzanordnung so an dem Untergestell befestigt, dass die Liege- und Sitzanordnung gegenüber der in den Figuren 9A und 9B gezeigten Konfiguration um 180° Grad gedreht ist und die untere Querstrebe von dem Schiebegriff weg zeigt. Das im Wagen sitzende Kind kann auf diese Weise in Fahrtrichtung des Wagens blicken.

### BEZUGSZEICHEN

- 1: Auflage
- 11: Erstes Auflageteil, Rückenlehne
- 12: Zweites Auflageteil, Sitz
- 13: Drittes Auflageteil, Beinauflage
- 14: Viertes Auflageteil, Fußauflage

- 2: Rahmen
- 21: Erste Seitenstrebe
- 22: Zweite Seitenstrebe
- 23: Untere Querstrebe
- 24: Obere Querstrebe
- 25: Muffe

- 3: Textiles Gewebe

- 4: Verdeck
- 41: Bügel
- 42: Verspannung
- 43, 44: Verstrebungen

- 5: Halte- und Standvorrichtung
- 51: Fuß
- 52₁, 52₂: Adapter
- 54₁, 54₂: Gelenke
- 55₁, 55₂: Betätigungselemente

- 6, 7: Verstellvorrichtungen, (z. B. Gurte)

- 100: Liege- und Sitzanordnung

## Patentansprüche

1. Liege- und Sitzanordnung, die aufweist:
- einen Rahmen (2);
- eine Auflage (1) mit einem ersten Auflageteil (11) und einem zweiten Auflageteil (12), die relativ zueinander abgewinkelt werden können und die hängend an dem Rahmen (2) gelagert sind;
- ein drittes Auflageteil (13), das benachbart zu dem zweiten Auflageteil (12) angeordnet ist, lösbar am Rahmen (2) befestigt ist und das an einem unteren Ende des Rahmens (2) über den Rahmen (2) hinausragt und
- ein textiles Gewebe (3), das am Rahme (2) befestigt ist und eine Tasche bildet, wobei
- das erste und das zweite Auflageteil (11, 12) in der Tasche angeordnet sind und weiterhin ein viertes Auflageteil (14) aufweist, das an einem dem Rahmen abgewandten Ende des dritten Auflageteils (13) angeordnet ist,
wobei bei montiertem dritten Auflageteil (13) die Auflage (1) über den Rahmen (2) hinaus verlängert ist.

2. Liege- und Sitzanordnung nach Anspruch 1, wobei das vierte Auflageteil (14) gegenüber dem dritten Auflageteil (13) abgewinkelt ist und wobei ein Winkel zwischen dem dritten und vierten Auflageteil (13, 14) zwischen 80° und 120° beträgt.

3. Liege- und Sitzanordnung nach Anspruch 1 oder 2, bei der das vierte Auflageteil (14) gegenüber dem dritten Auflageteil (13) eingeklappt werden kann, wobei der Winkel zwischen dem dritten und vierten Auflageteil (13, 14) in einem ausgeklappten Zustand des vierten Auflageteils (14) zwischen 80° und 120° beträgt, und wobei der Winkel zwischen dem dritten und vierten Auflageteil (13, 14) in einem eingeklappten Zustand des vierten Auflageteils (14) etwa 0° beträgt.

4. Liege- und Sitzanordnung nach einem der vorangehenden Ansprüche, die weiterhin eine Halte- und Standvorrichtung (5) aufweist, an der der Rahmen (2) befestigt ist.

5. Liege- und Sitzanordnung nach Anspruch 4, bei der der Rahmen (2) schwenkbar und arretierbar an der Halte- und Standvorrichtung (5) gelagert ist.

6. Liege- und Sitzanordnung nach Anspruch 5, wobei die Halte- und Standvorrichtung (5) Adapter (52₁, 52₂) mit jeweils einem Oberteil und einem Unterteil aufweist, wobei der Rahmen (2) an den Oberteilen der Adapter (52₁, 52₂) befestigt ist, und wobei zur schwenkbaren Lagerung des Rahmens (2) an der Halte- und Standvorrichtung (5) zwischen den Oberteilen und den Unterteilen der Adapter (52₁, 52₂) jeweils ein Gelenk (54₁, 54₂) angeordnet ist.

7. Liege- und Sitzanordnung nach einem der Ansprüche 4 bis 6 bei der die Halte- und Standvorrichtung (5) weiterhin einen Fuß (51) aufweist, der dazu ausgebildet ist, auf einer Oberfläche abgestellt zu werden und der an den Unterteilen der Adapter (52₁, 52₂) befestigt ist.

8. Liege- und Sitzanordnung nach Anspruch 7, die dazu ausgebildet ist, durch Schwenken des Rahmens (2) von einer Liegeposition in eine Sitzposition gebracht zu werden, und die dazu ausgebildet ist, dass in der Sitzposition das zweite Auflageteil (12) zur Auflage auf dem Fuß (51) der Halte- und Standvorrichtung (5) kommt.

9. Liege- und Sitzanordnung nach einem der vorangehenden Ansprüche, die weiterhin eine Verstellvorrichtung (6) aufweist, die dazu ausgebildet ist, eine Position des ersten Auflageteils (11) relativ zu dem Rahmen (2) zu verändern.

10. Liege- und Sitzanordnung nach Anspruch 9, bei der die Verstellvorrichtung wenigstens einen Gurt (6) aufweist.

11. Liege- und Sitzanordnung nach einem der vorangehenden Ansprüche, die weiterhin aufweist: eine weitere Verstellvorrichtung (7), die dazu ausgebildet ist, eine Position des zweiten Auflageteils (11) relativ zu dem Rahmen (2) zu verändern.

12. Liege- und Sitzanordnung nach Anspruch 11, bei der die weitere Verstellvorrichtung (7) wenigstens einen Gurt (7) aufweist.

13. Wagen, der aufweist:
eine Liege- und Sitzanordnung nach einem der Ansprüche 1 - 12 und ein fahrbares Untergestell (200), an dem die Liege- und Sitzanordnung (100) befestigt ist.

## Claims

1. Convertible bed and seat assembly, comprising:
- a frame (2);
- a support (1) with a first support part (11) and a second support part (12), which are bendable relatively to each other and which are pendulously mounted at the frame (2);
- a third support part (13), which arranged adjacent to the second support part (12) and which is detachably attached to the frame (2) and which protrudes over the frame (2) at a lower end of the frame (2) and
- a textile fabric (3), which is attached to the frame (2) and which forms a bag, wherein
- the first and second support part (11, 12) are arranged inside the bag and further comprises a fourth support part (14), which is arranged at an end of the third support part (13) opposite to the frame,
wherein, when the third support part (13) is assembled, the support (1) is extended in a way, exceeding the frame (2).

2. Convertible bed and seat assembly according to claim 1, wherein the fourth support part (14) is bent relative to the to the third support part (13) and wherein an angle between the third and fourth support parts (13, 14) amounts between 80° and 120°.

3. Convertible bed and seat assembly according to claim 1 or 2, wherein the fourth support part (14) is foldable relative to the third support part (13), wherein the angle between the third and fourth support part (13, 14) amounts between 80° and 120° in an unfolded state and wherein the angle between the third and fourth support part (13, 14) amounts to approximately 0° in a folded state.

4. Convertible bed and seat assembly according to one of the aforementioned claims, which further comprises a holding and standing device (5), to which the frame (2) is attached.

5. Convertible bed and seat assembly according to claim 4, wherein the frame (2) is pivotably and lockable mounted at the holding and standing device (5).

6. Convertible bed and seat assembly according to claim 5, wherein the holding and standing device (5) comprises adapters (52₁, 52₂) with each an upper and lower part, wherein the frame (2) is attached to the upper parts of the adapters (52₁, 52₂) and wherein, for the pivotable mounting of the frame (2), joints (54₁, 54₂) are arranged at the holding and standing device (5) between the upper and lower parts of the adapters (52₁, 52₂), one at each adapter.

7. Convertible bed and seat assembly according to one of the claims 4 to 6, wherein the holding and standing device (5) further comprises a base (51), which is designed to be placed on a surface, and which is attached to the lower parts of the adapters (52₁, 52₂).

8. Convertible bed and seat assembly according to claim 7, which is designed to be transferred from a lying position to a sitting position by pivoting the frame (2), and which is designed in a way that in the sitting position the second support part (12) is supported on the base (51) of the holding and standing device (5).

9. Convertible bed and seat assembly according to one of the aforementioned claims, further comprising an adjusting device (6), which is designed to adjust a position of the first support part (11) relative to the frame (2).

10. Convertible bed and seat assembly according to claim 9, wherein the adjusting device comprises at least one strap (6).

11. Convertible bed and seat assembly according to one of the aforementioned claims, further comprising a further adjusting device (7), which is designed to adjust a position of the second support part (11) relative to the frame (2).

12. Convertible bed and seat assembly according to claim 11, wherein the further adjusting device (7) comprises at least one strap (7).

13. Carriage, comprising:
a convertible bed and seat assembly according to one of the claims 1 to 12 and a drivable base frame (200), to which the convertible bed and seat assembly (100) is attached.

## Revendications

1. Ensemble de couchage et d'assise présentant :
- un châssis (2) ;
- un appui (1), comprenant une première partie d'appui (11) et une deuxième partie d'appui (12) qui sont aptes à être inclinées l'une par rapport à l'autre et qui sont suspendues au châssis (2) ;
- une troisième partie d'appui (13), qui est agencée de manière adjacente à la deuxième partie d'appui (12), est fixée de manière amovible au châssis (2) et qui dépasse d'une extrémité inférieure du châssis (2), au-delà du châssis (2), et
- un tissu textile (3), qui est fixé au châssis (2) et forme une poche,
- les première et deuxième parties d'appui (11, 12) étant agencées dans la poche et comprenant en outre une quatrième partie d'appui (14) qui est agencée à une extrémité de la troisième partie d'appui (13), opposée au châssis,
l'appui (1) s'étendant au-delà du châssis (2) lorsque la troisième partie d'appui (13) est montée.

2. Ensemble de couchage et d'assise selon la revendication 1, dans lequel la quatrième partie d'appui (14) est coudée par rapport à la troisième partie d'appui (13), et l'angle entre la troisième et la quatrième partie d'appui (13, 14) est compris entre 80° et 120°.

3. Ensemble de couchage et d'assise selon la revendication 1 ou la revendication 2, dans lequel la quatrième partie d'appui (14) est repliable par rapport à la troisième partie d'appui (13), l'angle entre la troisième et la quatrième partie d'appui (13, 14) étant compris entre 80° et 120° lorsque la quatrième partie d'appui (14) est dans un état déplié, et l'angle entre la troisième et la quatrième partie d'appui (13, 14) étant d'environ 0° lorsque la quatrième partie d'appui (14) est dans un état plié.

4. Ensemble de couchage et d'assise selon l'une des revendications précédentes, qui comprend en outre un dispositif de maintien et de support (5) auquel est fixé le châssis (2).

5. Ensemble de couchage et d'assise selon la revendication 4, dans lequel le châssis (2) est monté de manière pivotante et blocable sur le dispositif de maintien et de support (5).

6. Ensemble de couchage et d'assise selon la revendication 5, dans lequel le dispositif de maintien et de support (5) comprend des adaptateurs (52₁, 52₂) présentant chacun une partie supérieure et une partie inférieure, le châssis (2) étant fixé aux parties supérieures des adaptateurs (52₁, 52₂), et, pour le montage pivotant du châssis (2) sur le dispositif de maintien et de support (5), une articulation (54₁, 54₂) est agencée entre les parties supérieures et les parties inférieures des adaptateurs (52₁, 52₂)

7. Ensemble de couchage et d'assise selon l'une des revendications 4 à 6, dans lequel le dispositif de maintien et de support (5) comprend en outre un pied (51) qui est conçu pour être posé sur une surface et qui est fixé aux parties inférieures des adaptateurs (52₁, 52₂).

8. Ensemble de couchage et d'assise selon la revendication 7, qui est conçu pour être amené d'une position allongée en une position assise par pivotement du châssis (2) et qui est conçu de telle sorte que, dans la position assise, la deuxième partie d'appui (12) vient en appui sur le pied (51) du dispositif de maintien et de support (5).

9. Ensemble de couchage et d'assise selon l'une des revendications précédentes, qui comprend en outre un dispositif de réglage (6) qui est conçu pour modifier une position de la première partie d'appui (11) par rapport au châssis (2).

10. Ensemble de couchage et d'assise selon la revendication 9, dans lequel le dispositif de réglage comprend au moins une sangle (6).

11. Ensemble de couchage et d'assise selon l'une des revendications précédentes, qui comprend en outre : un dispositif de réglage supplémentaire (7) qui est conçu pour modifier une position de la deuxième partie d'appui (11) par rapport au châssis (2).

12. Ensemble de couchage et d'assise selon la revendication 11, dans lequel le dispositif de réglage supplémentaire (7) comprend au moins une sangle (7).

13. Poussette comprenant :
un ensemble de couchage et d'assise selon l'une des revendications 1 à 12 et une structure sous-jacente mobile (200) sur laquelle est fixé l'ensemble de couchage et d'assise (100).
